# EUROPÄISCHE PATENTANMELDUNG

(11) **EP 4 083 255 A2**
(43) Veröffentlichungstag der Anmeldung: **02.11.2022**
(21) Anmeldenummer: 22166801.5
(22) Anmeldetag: 05.04.2022
(51) Int. Cl.: C25B 1/02, C22B 5/00, C22B 34/10, C25C 3/36, B29C 64/00

(54) **ZERO-WASTE ROHSTOFF- UND SAUERSTOFFVERSORGUNG FÜR ZUKÜNFTIGE EXTRATERRESTRISCHE AKTIVITÄTEN DER MENSCHHEIT**

(30) Priorität: 06.04.2021 DE 102021108550
(71) Anmelder: Rheinisch-Westfälische Technische Hochschule (RWTH) Aachen, 52062 Aachen (DE)
(72) Erfinder: Milicevic Neumann, Ksenija, 52070 Aachen (DE); Friedrich, Prof. Dr. Karl Bernhard, 52074 Aachen (DE)
(74) Vertreter: Michalski Hüttermann & Partner Patentanwälte mbB

(57) **Zusammenfassung**

Die vorliegende Erfindung betrifft Zero-Waste Technik (die komplette Nutzung der planetarischen Rohstoffe, die Technik basiert auf Solarenergie und vermeidet Kohlenstoffverbrauch), Vermeidung des Transports von Rohstoffen von der Erde aus und damit verbundene Kosten sowie Ressourcenschonung auf der Erde, und die Erzeugung mehrerer Strukturwerkstoffe (Fe-Ti, Keramik) für den Aufbau von Infrastruktur auf dem Mond und Mars.

## Beschreibung

Die vorliegende Erfindung betrifft Zero-Waste Technik (die komplette Nutzung der planetarischen Rohstoffe, die Technik basiert auf Solarenergie und vermeidet Kohlenstoffverbrauch), Vermeidung des Transports von Rohstoffen von der Erde aus und damit verbundene Kosten sowie Ressourcenschonung auf der Erde, und die Erzeugung mehrerer Strukturwerkstoffe (Fe-Ti, Keramik) für den Aufbau von Infrastruktur auf dem Mond und Mars.

EP 2 736 320 B1 offenbart ein hydrometallurgisches Verfahren, zur Bereitstellung von Wasser, Sauerstoff und Nutzstoffen.

EP 2 598 716 B1 offenbart ein Verfahren für den Abbau, die Aufbereitung und die pyrometallurgische Weiterverarbeitung von Mond- bzw. Marsregolith. Im Unterschied zur Vorliegenden Erfindung wird hier lediglich eine Ein-Metalllegierung unter Zugabe von Aluminiumpulver erzeugt, die Kreislaufführung der resultierenden Oxide ist nicht vorgesehen.

US4948477 A offenbart ein Verfahren zur Erzeugung einer Fe-Ti-reichen Fraktion mittels Abbau im Tagebau, Aufbereitung und Anreicherung von Ilmenit aus Regolith. Aufgabe des Ilmenits in einen Fließbettreaktor zur Erzeugung von H₂, O₂ und Fe-Ti Fraktionen sowie einem mineralischen Rest. Dieser wird zusammen mit den Aufbereitungsabgängen in Bergwerk verbracht.

US5227032 A offenbart ein hydrometallurgisches Verfahren zur Gewinnung von Sauerstoff aus Mondgesteinen. Als Nebenprodukte werden Titan, Eisen und Schwefelsäure erzeugt.

Sirk et al., Massachsetts Institute of Technology (2019), Direct Electrolysis of Molten Lunar Regolith for the Production of Oxygen and Metals on the Moon*,* offenbart ein Verfahren zur Erzeugung von Metallfraktionen und Sauerstoffgas mittels direkter Elektrolyse von geschmolzenem Mondregolith.

Lomax et al., University of Glasgow (2020), Proving the viability of an electrochemical process for the simultaneous extraction of oxygen andproduction of metal alloys from lunar regolith*,* offenbart ein Verfahren zur Erzeugung von Metallfraktionen und Sauerstoffgas mittels direkter Elektrolyse von geschmolzenem Mondregolith.

Gegenüber dem Stand der Technik erlaubt die vorliegende Erfindung die Vermeidung von Elektrolytzersetzung und Verlust durch Verwendung der fluoridbasierten Systeme, saubere Trennung des elektrolytischen Metallproduktes vom Elektrolyt, und das Ermöglichen keiner Reststoffe.

Die Erfindung offenbart ein (Zero Waste-)Verfahren zur Gewinnung von Sauerstoff, Titan-Eisenlegierungen, ein mineralisches Produkt zur Nutzung z.B. in der Zementherstellung) und einer In-Situ Molten Salt Electrolysis of Regolith (MOSARI) Fraktion.

Als Einsatzszenario des Verfahrens wird der Auf- und Ausbau von Gebäuden und Infrastrutur auf extraterrestrischen Arealen wie dem Mond oder dem Mars angenommen. Durch das Verfahren soll zum einen die Bereitstellung von Sauerstoff für die Atemluft, aber auch die Bereitstellung von Ausgangsstoffen für Baumaterialen sichergestellt werden.

Dazu wird Regolith einer fluoridischen Schmelze zugegeben und mittels Solarenergie zunächst durch eine Schmelzflusselektrolyse zersetzt. Hierbei wird zum einen in den unedlen Mischoxiden enthaltene Sauerstoff freigesetzt und zum anderen eine metallische Legierung erzeugt. Die Magnesium-, Kalzium-, Aluminium- und Siliziumanteile dieser Legierung werden als Reduktionsmittel für die Erzeugung baulich nutzbarer Legierungen verwendet. Als Beispiel wird hier die Erzeugung einer FeTi-Legierung genannt, bei deren Herstellung Mg, K, Al oder Si, als unedle Metalle, den Sauerstoff der edleren Metalle aufnehmen. Die so entstandenen Oxide können im Kreislauf gefahren werden, um so wieder als Reduktionsmittel und Sauerstoffquelle zu dienen. Alternativ wird die Nutzung dieser oxidischen Nebenprodukte als Keramikprodukt oder Zementbasisprodukt vorgeschlagen.

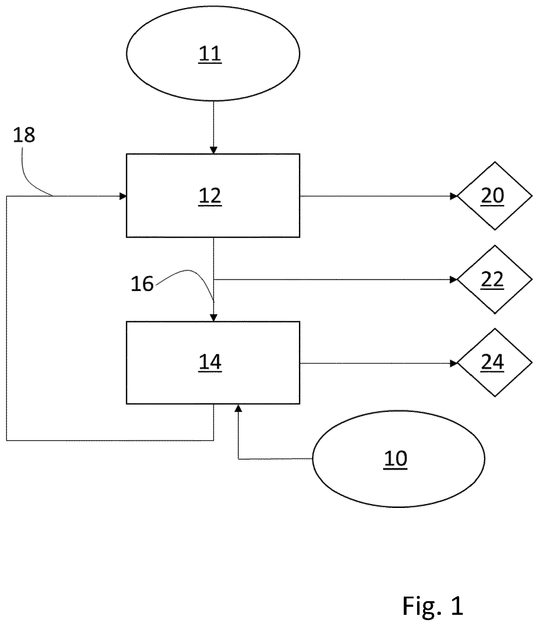

Fig. 1 zeigt schematisch ein Verfahren gemäß der vorliegenden Erfindung.

Wie in Figur 1 gezeigt umfasst die Erfindung eine zero-waste ISRU Technologie (In-Situ Resource Utilization) für beispielsweise Ca-/Mg-/Al haltige oxidische Multikomponenten Erze oder Mischungen (MKOM; z.B. Regolith 10, wie etwa FeTi-reiches Regolith 11, die eine schmelzflusselektrolytische Zersetzung 14 des Rohstoffs (Schritt 1) und eine metallothermischen Reduktion 12 (Schritt 2) umfasst. Zuerst wird nach Zugabe der MKOM zu einem Elektrolyt, insbesondere einer fluoridischen Schmelze, der gebundene Sauerstoff an einer inerten Anode freigesetzt, also als freigesetzter Sauerstoff 24 und eine metallische Legierung an der Kathode unter Anlegen einer Stromquelle erzeugt. Beispielsweise in extraterrestrischer Anwendung kann der Sauerstoff für die Atemversorgung oder als Oxidationsmittel für Treibstoffe dienen. Die metallischen, etwa Ca-/Mg-/Al-Anteile, der gewonnenen Legierung 18, insbesondere einer MgCaAl (Fe-Ti-Si) - Legierung werden als Reduktionsmittel für die Erzeugung nutzbarer Legierungen verwendet. In diesem Schritt wird aufbereitetes, an Zielmetall konzentriertes MKOM (im Falle Regolith z.B. reich an Ilmenit Mineral (FeTiO₃)) verwendet und daraus beispielsweise eine Fe-Ti basierte Legierung 20, etwa arm an CaMgAlSi, erzeugt. Dieser Prozessschritt basiert auf den verschiedenen Sauerstoffaffinitäten, wodurch die unedlen Elemente der in Schritt 1 erzeugten Legierung oxidiert werden, währenddessen die edleren Elemente des Konzentrates zu Metall reduziert werden. Die dabei entstehende Ca-/Mg-/Al-reiche oxidische Mineralphase 16 kann entweder zurück in den Elektrolyseprozess zugegeben (Schritt 1) oder als Baustoff (z.B. 3D-Druck, Zement) verwendet werden, also als mineralisches Produkt zur Baustoff-Verwendung 22. Beide Prozesse erfolgen vorzugsweise unter Schutzgas oder sehr niedrigem atmosphärischen Druck. Hierdurch qualifiziert sich das Verfahren insbesondere für den extraterrestrischen Einsatz.

Die Schmelzflusselektrolyse (Schritt 1) unter gleichzeitiger Gewinnung von mehr als drei Metallen ist nicht Stand der Technik, die vorliegende Erfindung beschreibt hingegen die gemeinsame Abscheidung von vier oder mehr geeigneten Elementen. Eine metallothermische Reduktion (Schritt 2) mit einer Legierung bestehend aus drei und mehr Metallen ist ebenso nicht vorbekannt.

Das vorgeschlagene Zero-Waste-Konzept kombiniert einzelne pyrometallurgische Verfahrensschritte zu einem neuartigen Verfahren, dass so noch nicht beschrieben wurde. Insbesondere die Kreislaufführung der unedlen Metalle als Reduktionsmittel ist hier ein neuer Ansatz.

### Bezugszeichenliste

- 10: Regolith
- 11: Fe-Ti reiches Regolith
- 12: metallothermische Reduktion
- 14: schmelzflusselektrolytische Zersetzung
- 16: oxidische Mineralphase (Fe-Ti-Si abgereicherter Regolith)
- 18: Legierung (MgCaAl (Fe-Ti-Si) - Legierung)
- 20: Fe-Ti basierte Legierung
- 22: Baustoff-Verwendung
- 24: freigesetzter Sauerstoff

## Patentansprüche

1. Verfahren zum Bereitstellen von Sauerstoff und zum Bereitstellen von Baumaterialien, aufweisend die Verfahrensschritte:
a) Zugeben einer Ausgangssubstanz aufweisend ein oxidisches Multikomponenten-Erz oder eine oxidische Multikomponten-Mischung, oder eine oxidische Mineralphase zu einem Elektrolyt und Zersetzung der Ausgangssubstanz durch Schmelzflusselektrolyse; wobei
b) Sauerstoff freigesetzt wird und
c) eine metallische Legierung erhalten wird; und
d) Verwenden der in Verfahrensschritt c) erhaltenen metallischen Legierung, insbesondere bestehend aus drei oder mehr Metallen, als Reduktionsmittel für die Erzeugung baulich nutzbarer Legierungen unter Durchführung eines Reduktionsschrittes.

2. Verfahren nach Anspruch 1, **dadurch gekennzeichnet, dass** die Ausgangssubstanz in Verfahrensschritt a) Regolith umfasst.

3. Verfahren nach Anspruch 1 oder 2, **dadurch gekennzeichnet, dass** die Ausgangssubstanz in Verfahrensschritt a) eine in Verfahrensschritt d) aus dem Reduktionsmittel erhaltenen oxidischen Mineralphase umfasst

4. Verfahren nach einem der Ansprüche 1 bis 3, **dadurch gekennzeichnet, dass** der Elektrolyt eine fluoridische Schmelze umfasst.

5. Verfahren nach einem der Ansprüche 1 bis 4, **dadurch gekennzeichnet, dass** die in Verfahrensschritt d) erzeugten baulich nutzbaren Legierungen Eisen-Titan basierte Legierungen umfassen.

6. Verfahren nach einem der Ansprüche 1 bis 5, **dadurch gekennzeichnet, dass** bei dem Verfahrensschritt c) entstehende Anteile an Magnesium, Kalzium, Aluminium oder Silizium in Verfahrensschritt d) als Reduktionsmittel verwendet werden.

7. Verfahren nach einem der Ansprüche 1 bis 6, **dadurch gekennzeichnet, dass** eine in Verfahrensschritt d) erhaltene oxidische Mineralphase als Baustoff verwendet wird.

8. Verfahren nach einem der Ansprüche 1 bis 7, **dadurch gekennzeichnet, dass** bei Verfahrensschritt d) ein Metall erzeugt wird.

9. Verfahren nach einem der Ansprüche 1 bis 8, **dadurch gekennzeichnet, dass** in dem Verfahren erzeugte oxidische Misch- und/oder Mineralphasen in einem 3D-Druck verwendet werden.

10. Verfahren nach einem der Ansprüche 1 bis 9, **dadurch gekennzeichnet, dass** bei Verfahrensschritt c) eine Legierung aus drei oder mehr als drei Metallen erzeugt wird.
